# EUROPEAN PATENT APPLICATION

(11) **EP 4 373 022 A1**
(43) Date of publication of application: **22.05.2024**
(21) Application number: 22208107.7
(22) Date of filing: 17.11.2022
(51) Int. Cl.: H04L 5/00

(54) **METHOD FOR MULTIPLEXING DATA SOURCES TO UPLINK TIME AND FREQUENCY RESOURCES BY A HARDWARE MODULE**

(71) Applicant: u-blox AG, 8800 Thalwil (CH)
(72) Inventor: Clark, Morag, Cambourne, CB23 6DW (GB); Keller, Thomas, Cambourne, CB23 6DW (GB)
(74) Representative: Epping - Hermann - Fischer

(57) **Abstract**

A method for multiplexing one or more data sources to a set of uplink time and frequency resources by a hardware module comprises determining, one or more patterns, wherein each pattern indicates a mapping of data from at least one of the one or more data sources to locations in the set of resources, and each pattern is represented by a pattern type associated with pattern parameters; providing the one or more patterns to the hardware module; and performing, by the hardware module, the mapping indicated by each pattern.

## Description

### TECHNICAL FIELD

This disclosure relates to a method for multiplexing one or more data sources to a set of uplink time and frequency resources by a hardware module and relates to a hardware module for the multiplexing. The disclosure further relates to a terminal device and a computer program product.

### BACKGROUND ART

In the access networks in the mobile communication systems such as 3GPP 5G New Radio (NR), multiple physical channels are defined to transmit data over the wireless links. Different physical channels are used to transmit different data, such as user data, control information, and physical signals. Over the wireless uplink from a user equipment (UE) to a radio access network (RAN), uplink time and frequency resources are used to carry data from all uplink data sources, including uplink physical channels and uplink physical signals, to the RAN. All of the various data sources are multiplexed to use the time and frequency resources over the uplink.

The uplink time and frequency resources are organized in resource grids in time and frequency domains. Taking the 5G NR as an example, in the resource grids, a resource block may include e.g. 12 consecutive subcarriers in the frequency domain, and a slot may include e.g. 14 orthogonal frequency-division multiplexing (OFDM) symbols in the time domain. A set of uplink time and frequency resources may thus include a plurality of resource blocks in the frequency domain and a plurality of symbols (in the following description, a symbol always refers to an OFDM symbol) in the time domain. Given the organized uplink time and frequency resources, when transmitting data from various data sources, data sources are multiplexed to the resources blocks and the symbols according to the specifications, e.g. the 3GPP standards for uplink multiplexing. To be more specific, for example, different resource blocks and symbols in a set of uplink time and frequency resources may be used to carry data from different data sources respectively, and vice versa, a data source may be mapped to one or more resource blocks and symbols in a set of uplink time and frequency resources.

The multiplexing of data sources to time and frequency resources is designed with high dynamicity and flexibility in the 3GPP specifications in order to best utilize the resources for higher transmission performance. Combined with the increasing requirement of transmission data rates, it is a big challenge to achieve the highly dynamic and flexible multiplexing with a high throughput of data. High amount of data from various data sources need to be correctly and dynamically mapped to the specified locations in the time and frequency resources with ultrafast speed.

In conventional implementations for the multiplexing of data sources to uplink time and frequency resources, hardware implemented solutions may achieve a fast speed mapping, but lack of flexibility due to hard-coded implementations; software implemented solutions may achieve flexibility but lack of fast speed; software controlled hardware solutions using bitmaps to resource grids may achieve flexibility but introduce huge overhead of control information from the software to the hardware and thus reduce the performance of the multiplexing. An uplink multiplexing solution that achieves both high flexibility and fast speed is not provided in the conventional solutions.

### SUMMARY OF INVENTION

An object to be achieved is to provide an improved multiplexing solution that provides both flexibility and fast speed for multiplexing data sources to uplink time and frequency resources.

This object is achieved with the subject-matter of the independent claims. Embodiments and developments derive from the dependent claims.

According to the present disclosure, one or more data sources are multiplexed to a set of uplink time and frequency resources by a hardware module. The improved multiplexing solution is based on the idea that a mapping of data from a data source to locations in the set of uplink time and frequency resources is efficiently indicated by a pattern. A pattern is represented by a pattern type with a set of pattern parameters. A limited set of pattern types are pre-defined and each pattern type is combined with a pre-defined set of pattern parameters. By using the set of pattern types with their pattern parameters, various possibilities of the mapping can be represented. The patterns are provided to the hardware module which is configured to be able to interpret the patterns. The hardware module fetches data from the data sources and maps the data to the locations in the set of uplink time and frequency resources indicated in the patterns. A fast speed multiplexing is thus performed by the hardware module.

By means of the newly defined pattern types and their pattern parameters, the multiplexing is represented efficiently and flexibly. Arbitrary possibilities of the multiplexing, even new variations in possible future specifications, can be described using the set of pattern types and their pattern parameters. The control of the hardware module has a minimal effort due to the efficiently represented patterns. The hardware module is able to interpret the efficiently represented patterns and performs the multiplexing in ultrafast speed. The improved multiplexing solution hence achieves both high flexibility and fast speed for multiplexing data sources to uplink time and frequency resources.

According to the present disclosure, the method for multiplexing one or more data sources to a set of uplink time and frequency resources by a hardware module comprises determining one or more patterns, wherein each pattern indicates a mapping of data from at least one of the one or more data sources to locations in the set of resources, and each pattern is represented by a pattern type associated with pattern parameters, wherein a pattern type is selected from a set of pre-defined pattern types, and each pre-defined pattern type is associated with a respective pre-defined set of pattern parameters; the method further comprises providing the one or more patterns to the hardware module, and performing by the hardware module the mapping indicated by each pattern. In some implementations, a software driver, a software controller or a software module determines and provides the one or more patterns to the hardware module. By means of the method, a flexible and fast multiplexing is achieved.

In some implementations, the method further comprises determining one or more OFDM symbols in the set of resources, wherein at least one of the one or more symbols uses at least one of the determined one or more patterns to select data from the at least one of the one or more data sources; associating the respectively used patterns to the at least one of the one or more symbols; providing the one or more symbols to the hardware module; and for each symbol associated with the respectively used patterns, performing by the hardware module the mapping indicated by each used pattern. In this way, when a pattern is used in multiple symbols, the same patterns may not need to be provided to the hardware module redundantly, hence the flexibility and the efficiency of the multiplexing are further improved.

In some further implementations, when associating the respectively used patterns to the at least one of the one or more symbols, a bitmap is generated to indicate the patterns respectively used by the correspondent symbols. The association using a bitmap further improves the flexibility of the multiplexing.

In some implementations of the method, the pre-defined pattern types include at least one of: mapping zeros and/or data from a data source to contiguous locations in the set of resources, mapping data from a data source to noncontiguous locations in the set of resources, mapping data from a data source to contiguous and noncontiguous locations in the set of resources. The limited set of pre-defined pattern types can flexibly and efficiently represent arbitrary possibilities of the multiplexing in either the existing specifications or possible future extensions.

In some further implementations of the method, the pre-defined set of pattern parameters includes at least one of: an identifier of the associated pattern type, one or more identifiers of the one or more data sources respectively, indicators of locations in the set of resources; wherein the indicators include at least one of: beginning and end locations, offset of locations, stride of locations, a bitmap of locations, complement usage of locations. In some implementations, a pre-defined set of pattern parameters associated with a pre-defined pattern type may include some of the listed pattern parameters. Different sets of pattern parameters associated with different pattern types may include same or different pattern parameters from the listed pattern parameters. The pattern parameters used together with the pattern types can flexibly and efficiently represent arbitrary possibilities of the multiplexing in either the existing specifications or possible future extensions.

In some implementations of the method, determining the one or more patterns is based on 3GPP standards for uplink resource multiplexing. The multiplexing can be hence compliant with 3GPP standards.

The present disclosure further provides a hardware module for multiplexing one or more data sources to a set of uplink time and frequency resources according to the improved multiplexing solution. The hardware module comprises a memory, a processing unit and a plurality of interfaces. The memory is configured to store one or more patterns, wherein each pattern indicates a mapping of data from at least one of the one or more data sources to locations in the set of resources; and each pattern is represented by a pattern type associated with pattern parameters, wherein a pattern type is selected from a set of pre-defined pattern types, and each pre-defined pattern type is associated with a respective pre-defined set of pattern parameters. The processing unit is configured to perform the mapping indicated by each stored pattern. A first interface of the plurality of interfaces is configured to fetch data from the one or more data sources, and a second interface of the plurality of interfaces is configured to output each fetched data with the mapped locations in the set of resources. In some implementations, the data fetched may be complex data samples generated according to 3GPP standards, and may be output to the mapped locations in an IFFT input memory.

In some implementations, the memory of the hardware module is further configured to store an association between one or more symbols with the stored one or more patterns, wherein at least one of the one or more symbols uses at least one of the stored one or more patterns to select data from the at least one of the one or more data sources. The processing unit of the hardware module is further configured to, for each of the at least one of the one or more symbols, perform the mapping indicated by each used pattern.

In some further implementations, the hardware module further comprises a third interface of the plurality of interfaces for storing the one or more patterns and/or the association into the memory.

In some further implementations, when the memory of the hardware module is configured to store an association between one or more symbols with the stored one or more patterns, the association comprises a bitmap indicating the at least one of the stored one or more patterns used by the at least one of the one or more symbols.

In some implementations of the hardware module, the pre-defined pattern types include at least one of: mapping zeros and/or data from a data source to contiguous locations in the set of resources, mapping data from a data source to noncontiguous locations in the set of resources, mapping data from a data source to contiguous and noncontiguous locations in the set of resources.

In some implementations of the hardware module, the pre-defined set of pattern parameters includes at least one of: an identifier of the associated pattern type, one or more identifiers of the one or more data sources respectively, indicators of locations in the set of resources; wherein the indicators include at least one of: beginning and end locations, offset of locations, stride of locations, a bitmap of locations, complement usage of locations.

In some implementations, the processing unit of the hardware module comprises a control unit and an execution unit. The control unit of the processing unit is configured to select a pattern to be executed from the stored pattern types. The execution unit of the processing unit is configured to perform the mapping indicated by the selected pattern.

In some implementations, the first interface of the hardware module is configured to fetch data from the one or more data sources including physical uplink shared channel (PUSCH) data, PUSCH demodulation reference signal (DMRS), physical uplink control channel (PUCCH) data, PUCCH DMRS, physical random access Channel (PRACH) sequences, sounding reference signals (SRS), zeros.

In some implementations, the second interface of the hardware module is configured to output each fetched data to an input memory of an IFFT processor at addresses corresponding to the mapped locations in the set of resources.

Further implementations and developments of the hardware module become readily apparent for the skilled reader from the various implementations described above in conjunction with the method for multiplexing one or more data sources to a set of uplink time and frequency resources by a hardware module.

The present disclosure further provides a terminal device comprising a hardware module according to one of the above implementations. Further implementations and developments of the terminal device become readily apparent for the skilled reader from the various implementations described above in conjunction with the method and the hardware module.

According to one embodiment of the improved multiplexing solution, a computer program comprises instructions that may be stored in a preferably non-transitory computer-readable storage medium, when the instructions are executed on one or more processors of a device having a hardware module, the instructions enable the one or more processors to execute a method according to one of the implementations described above.

### BRIEF DESCRIPTION OF DRAWINGS

The improved multiplexing solution will be explained in more detail in the following with the aid of the drawings. Elements and functional blocks having the same or similar function bear the same reference numerals throughout the drawings. Hence their description is not necessarily repeated in the following drawings.

In the drawings:
- Figure 1: shows an example system for multiplexing data sources to uplink time and frequency resources by a hardware module;
- Figure 2: shows a flowchart of a method for multiplexing one or more data sources to a set of uplink time and frequency resources by a hardware module;
- Figure 3a, 3b, 3c: show the mapping represented by example patterns;
- Figure 4: shows a flowchart of another embodiment of the method;
- Figure 5a, 5b: show an association described by an example PatternControl;
- Figure 6: shows an example implementation of a hardware module; and
- Figure 7: shows another example implementation of the hardware module in a multiplexing system.

### DETAILED DESCRIPTION

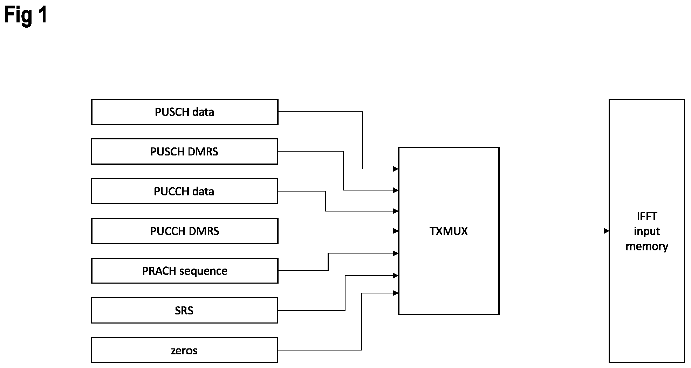

Figure 1 shows an example system for multiplexing data sources to uplink time and frequency resources by a hardware module. In the uplink transmission chain showing in the example, data to be transmitted may be data from uplink channels (PUSCH, PUCCH, PRACH), or may be uplink signals (DMRS, SRS) or zero data. All the data are fed into a hardware module, TXMUX. TXMUX multiplexes and outputs the data to the mapped uplink time and frequency resources for further modulation and transmission. For example, TXMUX selects data from the data sources, maps the data to some locations in the uplink time and frequency resources, and outputs the data with the mapped locations to a modulator which further modulates the data in the uplink time and frequency resources at the mapped locations. The data can then be transmitted over the uplink time and frequency resources.

In the example in Figure 1, the data may be complex samples compliant with 3GPP standards, and a location in the uplink time and frequency resources may correspond to a location in the IFFT input memory. For example, one dimension of the IFFT input memory corresponds to the time domain in the uplink resources, and the other dimension of the IFFT input memory corresponds to the frequency domain in the uplink resources. TXMUX fetches a complex sample from a data source, provides the complex sample with a mapped location to the IFFT input memory, so that the complex sample can be written at the mapped location in the IFFT input memory and to be modulated in the correspondent uplink time and frequency resources by a modulator.

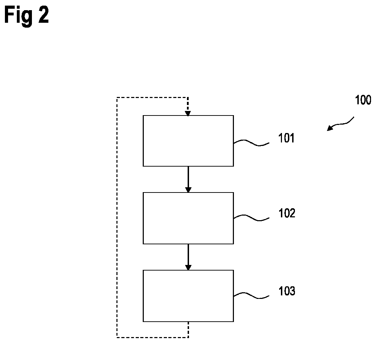

Figure 2 shows a flowchart of an example embodiment of a method 100 for multiplexing one or more data sources to a set of uplink time and frequency resources by a hardware module. The method 100 may be carried out in the example system for the multiplexing shown in Figure 1.

In step 101 of the method 100, one or more patterns are determined. A pattern indicates a mapping of data from at least one of the one or more data sources to locations in the set of resources. To indicate such a mapping, a pattern may first indicate one or more data sources, for example, a single data source, e.g., PUCCH data, or a double data source, e.g., PUCCH DMRS and PUCCH data. A pattern may further indicate the locations to be mapped to, e.g., which subcarriers (SCs) of which resource blocks (RBs) the data is mapped to. Such a pattern may thus indicate a mapping of data from the indicated data source(s) to the indicated SC and RB locations for a symbol. For a same symbol, one or more patterns may be determined.

To flexibly and efficiently represent a pattern, a set of pattern types is pre-defined, and each pattern type is associated with a respective pre-defined set of pattern parameters. A determined pattern in step 101 can be represented by a pattern type selected from the set of pre-defined pattern types and associated with its pattern parameters.

A pattern represented by a pattern type with its pattern parameters may be encoded in 32-bit word(s). Depending on different pattern types and their pattern parameters, a pattern may be encoded using 1 to 5 words. The 1 to 5 words of an encoded pattern may contain an identifier of the pattern type of this pattern and the values of the pattern parameters for this pattern type.

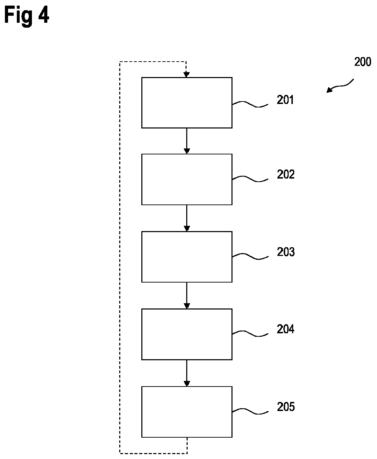

Table 1 shows an example set of pre-defined pattern types. In the example shown in Table 1, 7 pattern types are pre-defined. Each pattern type is given a name and an identifier MuxPatternId. MuxPatternId can be encoded using 4 bits, and can thus represent values of 0-15. The values 0-6 of MuxPatternId can be used to indicate the 7 pre-defined pattern types. The values 7-13 and 15 of MuxPatternId are not used yet, and may be reserved for future use. The value 14 of MuxPatternId may be used to indicate that the encoded word(s) represent a "PatternControl", which is described in later sections with Figure 4.

**Table 1: an example set of pre-defined pattern types**

| MuxPatternId | Name of a pattern type |
|---|---|
| 0 | Contig |
| 1 | OffsetStrideFillNoRepeat |
| 2 | OffsetStrideFillRBRepeat |
| 3 | OffsetStrideRbPatternNoRepeat |
| 4 | OffsetStrideRbPatternRbRepeat |
| 5 | RbBitmapFill |
| 6 | RbBitmapRbPattern |
| 7-13 | not used yet |
| 14 | PatternControl |
| 15 | Not used yet |

Each pattern type may have a pre-defined set of pattern parameters. The pattern parameters of each pattern type may be different. In the encoded word(s) of a pattern, different fields are defined to encode pattern parameters. In the following, examples of pattern parameters for each pattern type and the correspondent fields to encode the word(s) of a pattern are shown. In the examples, the number of bits (NumBits) of each field and the position of each field in the encoded word(s) are shown in the following tables. Positions start from the least significant bit of a word.

**Table 2: an example for encoding pattern parameters of pattern type "Contig"**

| Field | Number of bits | Position |
|---|---|---|
| MuxPatternId | 4 | 0 |
| SourceId | 4 | 4 |
| StartRB | 7 | 8 |
| EndRB | 7 | 15 |
| StartSC | 4 | 22 |
| EndSC | 4 | 26 |

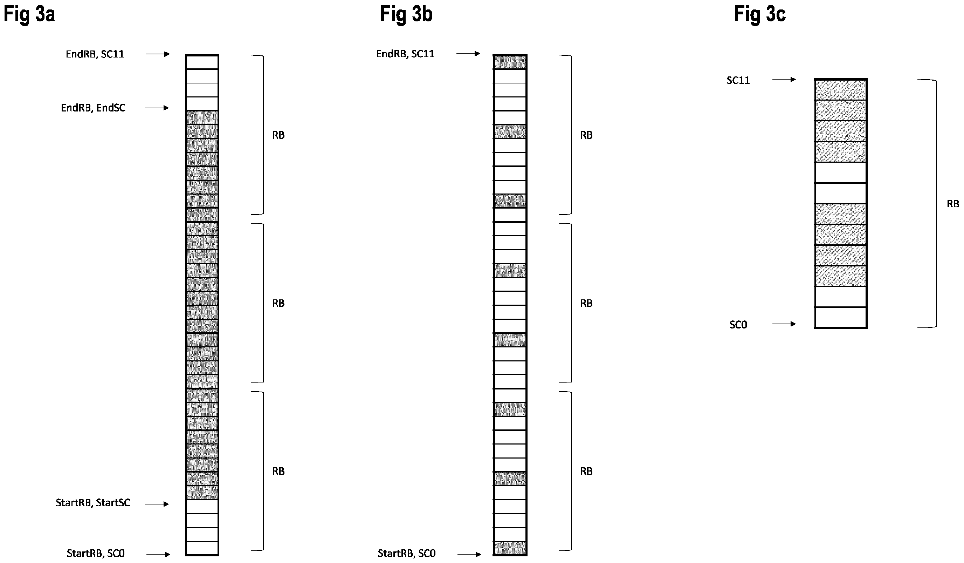

As an example, for the pattern type "Contig" shown in Table 1, one 32-bit word may be used to encode a pattern of this type. The fields in the word for encoding the pattern parameters of this type are shown in Table 2. In the word, the field MuxPatternId is set to value 0 according to Table 1. The field SourceId is used to indicate data from which data source to be mapped using this pattern. For example, SourceId may be PRACH to indicate that data from PRACH to be mapped using this pattern. The fields StartRB, EndRB, StartSC, EndSC, are used together to indicate the locations to which the data to be mapped using this pattern. For example, an encoded word of a pattern in this pattern type may indicate that the data from PRACH to be mapped to locations between StartSC of StartRB and EndSC of EndRB for a symbol. The mapping represented by the example encoded pattern is shown in Figure 3a, which shows that data are mapped to the resources between (StartRB, StartSC) and (EndRB, EndSC). The resources between (StartRB, SC0) to (StartRB, StartSC) and between (EndRB, EndSC) to (EndRB, SC11) are mapped with zeros.

As an example, for the pattern type
"OffsetStrideFillNoRepeat" shown in Table 1, one 32-bit word may be used to encode a pattern of this type. The fields in the word for encoding the pattern parameters of this type are shown in Table 3. In the word, the field MuxPatternId is set to value 1 according to Table 1. The fields StartRB, EndRB, SCOffset, SCStride, are used together to indicate that data to be mapped to a set of contiguous subcarriers from SCO of StartRB to SC11 of EndRB at the SCOffset and the SCStride, and to start the SCOffset and the SCStride from the StartRB. Figure 3b shows a mapping represented by an example encoded pattern of this type. SCOffset is set to 0, and SCStride is set to 5. The example encoded pattern indicates that data should be mapped to (StartRB, SCO + SCOffset), then mapped to (StartRB, SCO + SCOffset + SCStride), and then goes to the next SCStride and so on, until (EndRB, SC11) is reached.

**Table 3: an example for encoding pattern parameters of pattern types "OffsetStrideFillNoRepeat" and "OffsetStrideFillRBRepeat"**

| Field | Number of bits | Position |
|---|---|---|
| MuxPatternId | 4 | 0 |
| SourceId | 4 | 4 |
| StartRB | 7 | 8 |
| EndRB | 7 | 15 |
| UseComplement | 1 | 22 |
| SCOffset | 4 | 23 |
| SCStride | 4 | 27 |

As an example, for the pattern type
"OffsetStrideFillRBRepeat" shown in Table 1, one 32-bit word may be used to encode a pattern of this type. The fields in the word for encoding the pattern parameters of this type are shown in Table 3. In the word, the field MuxPatternId is set to value 2 according to Table 1. The fields StartRB, EndRB, SCOffset, SCStride, are used together to indicate that data to be mapped to a set of contiguous subcarriers from SCO of StartRB to SC11 of EndRB at the SCOffset and the SCStride and to re-start the SCOffset and the SCStride at every RB.

As an example, for the pattern type
"OffsetStrideRbPatternNoRepeat" shown in Table 1, five 32-bit words may be used to encode a pattern of this type. The fields in the words for encoding the pattern parameters of this type are shown in Table 4. In the words, the field MuxPatternId is set to value 3 according to Table 1. The field RBRepeatPatternBitmap is a bitmap used to indicate which RBs to apply the SCOffset and the SCStride to and does not restart the SCOffset and the SCStride in any contiguous RBs. The bitmap may have a length of 106 bits, wherein each bit corresponds to a RB, and a "1" bit indicates to apply the SCOffset and the SCStride in the RB. The least significant bit (LSB) of the bitmap corresponds to RB0. The bitmap is able to indicate for all the RBs in the maximum bandwidth supported by 5G NR.

As an example, for the pattern type
"OffsetStrideRbPatternRbRepeat" shown in Table 1, five 32-bit words may be used to encode a pattern of this type. The fields in the words for encoding the pattern parameters of this type are shown in Table 4. In the words, the field MuxPatternId is set to value 4 according to Table 1. The field RBRepeatPatternBitmap is a bitmap used to indicate which RBs to apply the SCOffset and SCStride to and restart the SCOffset and the SCStride in each RB.

**Table 4: an example for encoding pattern parameters of pattern types "OffsetStrideRbPatternNoRepeat" and "OffsetStrideRbPatternRbRepeat"**

| Field | Number of bits | Position |
|---|---|---|
| MuxPatternId | 4 | 0 |
| SourceId | 4 | 4 |
| pad | 13 | 8 |
| UseComplement | 1 | 21 |
| SCOffset | 4 | 22 |
| SCStride | 4 | 26 |
| RBRepeatPatternBitmap | 128 | 0 |

In addition, the field UseComplement can be used in some pattern types with offset and stride parameters. The field UseComplement uses 1 bit, and a bit "1" indicates that, for a single data source, the pattern uses the complement of the offset and stride parameters for mapping; for a double data source, the pattern uses the complement of the offset and stride parameters for mapping the first data source, and the offset and stride parameters for mapping the second data source. For example, a pattern may indicate a double source of PUCCH DMRS and PUCCH data, the data from the two data sources may be mapped in complement locations (i.e., subcarriers) in RBs.

Further, the field pad can be used to signify empty or unused bits and functions as padding for or as part of the pattern. The field pad is used as a dummy parameter so that the same parameters in different patterns are bit-aligned. The field pad is different from the zero-padding that can be done at the start and end of e.g. the contiguous pattern, where zeros can be written to the IFFT memory rather than samples from a data generator or data source.

As an example, for the pattern type "RbBitmapFill" shown in Table 1, two 32-bit words may be used to encode a pattern of this type. The fields in the words for encoding the pattern parameters of this type are shown in Table 5. In the words, the field MuxPatternId is set to value 5 according to Table 1. The field "SCBitmap for a RB" is a bitmap used to indicate which SC in a RB is selected to be mapped with data. The bitmap has a length of 12 bits, as there are typically 12 subcarriers in a RB. Each bit in the bitmap corresponds to a SC in a RB, and a "1" bit indicates the correspondent SC to be selected to be mapped with data. Figure 3c shows a mapping represented by an example "SCBitmap for a RB". The "SCBitmap for a RB" is "001111001111" indicating that SC2 to SC5 and SC8 to SC11 are mapped with data. The fields StartRB and EndRB indicate that the "SCBitmap for a RB" apply to each RB in range from StartRB to EndRB.

**Table 5: an example for encoding pattern parameters of pattern type "RbBitmapFill"**

| Field | Number of bits | Position |
|---|---|---|
| MuxPatternId | 4 | 0 |
| SourceId | 4 | 4 |
| StartRB | 7 | 8 |
| EndRB | 7 | 15 |
| SCBitmap for a RB | 12 | 0 |

**Table 6: an example for encoding pattern parameters of pattern type "RbBitmapRbPattern"**

| Field | Number of bits | Position |
|---|---|---|
| MuxPatternId | 4 | 0 |
| SourceId | 4 | 4 |
| SCBitmap for a RB | 12 | 8 |
| RBRepeatPatternBitmap | 128 | 0 |

As an example, for the pattern type "RbBitmapRbPattern" shown in Table 1, five 32-bit words may be used to encode a pattern of this type. The fields in the words for encoding the pattern parameters of this type are shown in Table 6. In the words, the field MuxPatternId is set to value 6 according to Table 1. The field "SCBitmap for a RB" is a bitmap used to indicate which SC in a RB is selected to be mapped with data. The field RBRepeatPatternBitmap indicates which RBs to apply the "SCBitmap for a RB".

Referring back to Figure 2, in step 101 of the method 100, one or more patterns are determined and can be represented using pattern types and pattern parameters which indicate efficiently various possible mappings between data sources and locations to be mapped to. For example, the patterns may be encoded using the above example word(s) containing the pattern type identifiers and their pattern parameters. One or more patterns may be determined for a symbol or for multiple symbols. The determination of patterns may be based on any releases of 3GPP standards for uplink resource multiplexing.

In step 102 of the method 100, the determined one or more patterns are provided to the hardware module. For example, the encoded word(s) representing the determined patterns are provided to the hardware module.

In step 103 of the method 100, the hardware module performs the mapping indicated by each provided pattern. For example, for each provided pattern, the hardware module interprets the encoded pattern, fetches data from the data sources indicated in the pattern, maps the data to the locations indicated in the pattern, and generates the output of the data with the mapped locations.

The method 100 can be performed continuously, such that the method starts over with step 101 by determining further patterns.

As an example, the example system for the multiplexing shown in Figure 1 may carry out the method 100. In step 101, several patterns may be determined for a symbol or for multiple symbols. The patterns may be one or some of the pattern types 0-6 shown in Table 1. The patterns may be encoded using the words shown in Tables 2-6. In step 102, the encoded words are provided to TXMUX. In step 103, TXMUX interprets each pattern in the encoded word(s). For each pattern, TXMUX identifies the single or double data source according to the SourceId field, and identifies the locations of SCs and RBs according to the relevant fields of SC and RB. TXMUX can accordingly fetch complex samples from the identified data source and map to the identified locations. TXMUX may then generate outputs of the complex samples with the mapped locations and provide the outputs further to the IFFT input memory. TXMUX may continuously perform the steps whenever patterns are provided.

Figure 4 shows a flowchart of another example embodiment of a method 200 for multiplexing one or more data sources to a set of uplink time and frequency resources by a hardware module. The method 200 may be carried out in the example system for the multiplexing shown in Figure 1.

In step 201 of the method 200, one or more patterns are determined for a symbol or for multiple symbols. For example, the pattern types 0-6 shown in Table 1 and the pattern parameters shown in Tables 2-6 can be used to represent and encode the patterns.

In step 202 of the method 200, one or more symbols are determined, wherein at least one of the one or more symbols uses at least one of the determined one or more patterns to select data from the data sources. A same pattern may apply to one or more symbols. For example, multiple symbols may have a same pattern for mapping data from PRACH to same locations of SC and RB in each of the multiple symbols. Moreover, multiple patterns may apply to a same symbol. For example, a symbol may have a pattern for mapping data from PUSCH data to some SCs and RBs in the symbol, and another different pattern for mapping data from PUSCH DMRS to some different SCs and RBs in the symbol. Therefore, in step 202, which symbol using which pattern(s) among the determined patterns, or not using a pattern, is determined.

It should be noted that, step 201 and 202 may not be carried out separately in the order shown in Figure 4. Determining the patterns and the symbols using the patterns may be carried out simultaneously in a single step.

In step 203 of the method 200, the one or more symbols are associated with the respectively used patterns. For example, a PatternControl word may be used to describe the association. A PatternControl word may be a 32-bit word including the fields shown in Table 7. In the word, the field MuxPatternId is set to value 14 as shown in Table 1. The fields NumPatterns and NumSymbols indicate that how many patterns are used for how many symbols. As an example, the value of NumSymbols may range from 1 to 14, and the value of NumPatterns may range from 1 to 8. SymbolPatternPtr is a pointer to a four 32-bit words of SymbolPattern, which contains pattern bitmaps for the symbols. PatternPtrTable is a pointer to a table, wherein each entry of the table is a pointer to an encoded pattern used for the symbols.

**Table 7: an example for encoding a PatternControl word**

| Field | Number of bits | Position |
|---|---|---|
| MuxPatternId | 4 | 0 |
| NumSymbols | 4 | 4 |
| SymbolPatternPtr | 8 | 8 |
| NumPatterns | 4 | 16 |
| PatternPtrTable | 8 | 20 |

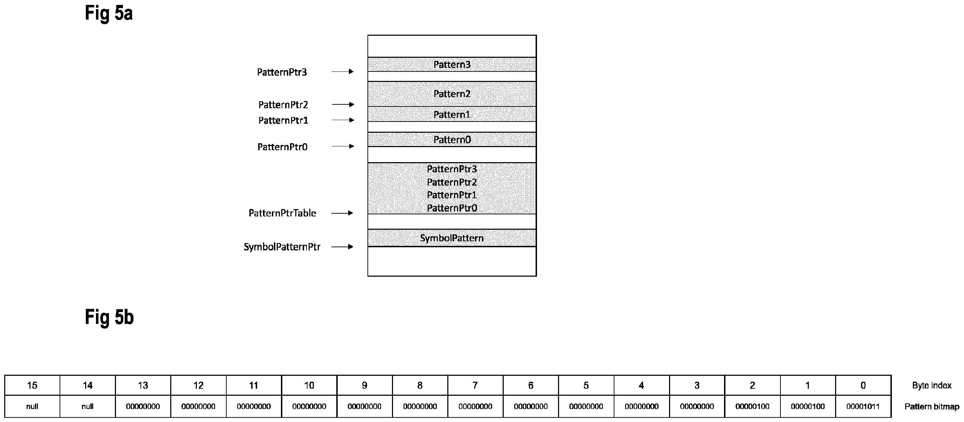

An association described by an example PatternControl is shown in Figures 5a and 5b. In this example, NumSymbols is 14 and NumPatterns is 4. An example of SymbolPatternPtr, PatternPtrTable and the pointers to four encoded patterns in the memory of TXMUX is shown in Figure 5a. SymbolPatternPtr is an address in the memory of TXMUX, wherein the SymbolePattern containing pattern bitmaps for the symbols are stored at the address. PatternPtrTable is an address in the memory of TXMUX, wherein a table of four pointers, i.e., PatternPtr0, PatternPtr1, PatternPtr2 and PatternPtr3, is stored at the address. The four pointers PatternPtr0 to PatternPtr3 are addresses in the memory of TXMUX, storing the encoded patterns Pattern0, Pattern1, Pattern2 and Pattern3 at respective addresses. An example of SymbolePattern containing pattern bitmaps for 14 symbols using the four encoded patterns is shown in Figure 5b. The example SymbolePattern has four 32-bit words, wherein each byte of the first 14 bytes in the words corresponds to a symbol, starting from byte 0 corresponding to symbol 0. Each bit in a byte corresponds to a pattern to be used for the correspondent symbol. In the example, bits 0, 1, 3 of byte 0 ("00001011") are set to "1", indicating that Pattern0, Pattern1 and Pattern3 are used for symbol 0. Bytes 1 and 2 are "00000100", indicating that Pattern2 is used for symbols 1 and 2. The other symbols do not use any patterns in this example.

Referring back to Figure 4, in step 204 of the method 200, the one or more symbols associated with the respectively used patterns are provided to the hardware module. For example, a PatternControl word is provided to the hardware module.

In step 205 of the method 200, the hardware module performs the mapping according to each used pattern for each symbol. For example, the hardware module interprets the PatternControl word, identifies each pattern used for each symbol according to the SymbolPattern, and performs the mapping according to each used pattern.

The method 200 can be performed continuously, such that the method starts over with steps 201 and 202 by determining further patterns and symbols.

As an example, the example system for the multiplexing shown in Figure 1 may carry out the method 200.

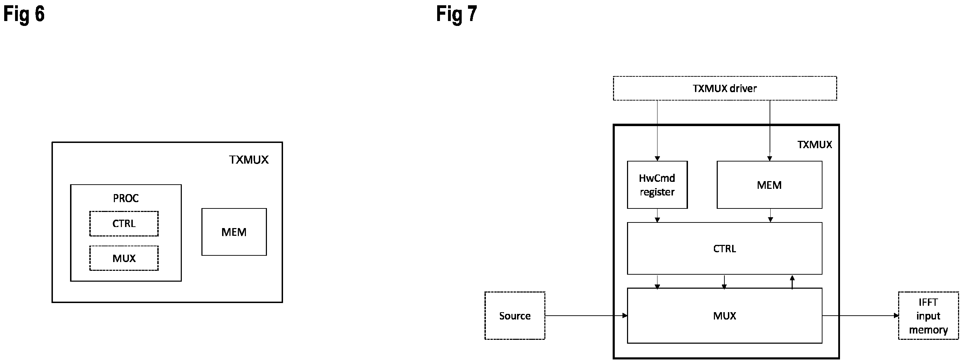

Figure 6 shows an example implementation of a hardware module TXMUX for multiplexing one or more data sources to a set of uplink time and frequency resources. TXMUX may be configured to carry out various embodiments of method 100 and/or 200 and applied in the example system for the multiplexing shown in Figure 1. TXMUX comprises a processing unit PROC and a memory MEM. MEM may be configured to store one or more patterns. The patterns are represented by pre-defined pattern types and their pattern parameters, and may be the encoded patterns used in the embodiments of method 100 and 200. PROC may be configured to perform the mapping indicated by each stored pattern in MEM. TXMUX further comprises a first interface configured to fetch data from the one or more data sources, and a second interface configured to output each fetched data with the mapped locations in the set of resources. TXMUX further comprises a third interface for storing the one or more patterns into MEM.

In some implementations of TXMUX, MEM may be further configured to store an association between one or more symbols with the stored one or more patterns. The association may be described by the PatternControl words used in the embodiments of method 200. The third interface may be further configured for storing the associations into MEM. PROC may be further configured to, for each of the one or more symbols, perform the mapping indicated by each used pattern.

In some implementations of TXMUX, PROC may comprise a control unit CTRL and an execution unit MUX. CTRL may be configured to select a pattern to be executed from the stored pattern types in MEM, and provide the selected pattern to MUX. For example, CTRL may be configured to interpret the PatternControl words in MEM, and select the used pattern(s) for each symbol according to the PatternControl words. MUX may be configured to interpret each pattern from CTRL, perform the mapping indicated by the pattern. According to each pattern, MUX may be configured to fetch data from the one or more data sources, and output each fetched data with the mapped locations in the set of resources to, e.g., to an input memory of an IFFT processor at addresses corresponding to the mapped locations in the set of resources.

Further implementations of TXMUX become readily apparent from the various implementations described above in conjunction with the method 100 and 200.

Figure 7 shows another example implementation of the hardware module TXMUX in a multiplexing system. TXMUX may be configured to carry out various embodiments of method 100 and/or 200 and applied in the example system for the multiplexing shown in Figure 1. TXMUX may comprise MEM, CTRL, MUX, and may further comprise a HwCmd register. A TXMUX driver may be a software module in communication with TXMUX. When data needs to be multiplexed for transmission, the TXMUX driver may be configured to determine patterns and associate symbols with the patterns, and generate the encoded patterns, SymbolPattern words and a PatternControl word for the symbols. It may be configured to write the encoded patterns, SymbolPattern words and the PatternControl word in MEM of TXMUX, and write the address of the PatternControl word to the HwCmd register of TXMUX. Upon receiving the address of the PatternControl word, CTRL of TXMUX may retrieve the PatternControl word from MEM according to the address, and interpret the PatternControl word to get addresses of encoded patterns for each symbol. For a pattern used for a symbol, CTRL may provide the pattern from MEM to MUX and signal to MUX. Upon the signaling, MUX may interpret the provided pattern and perform the mapping accordingly, e.g., fetch complex samples from the Source and output them with mapped locations to an IFFT input memory, and then signal to CTRL when finish. CTRL may provide the next pattern and repeat the procedure with MUX until all patterns for all symbols in a PatternControl word have been processed. CTRL may process the next PatternControl word if available, or wait in idle until the HwCmd register is written with the address of a new PatternControl word by the TXMUX driver.

It should be noted that some patterns and SymbolPattern words may be written only once in MEM by the TXMUX driver. The TXMUX driver may directly provide the addresses of them when same pattrens and SymbolPattern words already written in MEM, so that repeated writing in MEM is avoided. Therefore, Read-only memory (ROM) may be used for commonly used patterns and SymbolPattern words.

It should be apparent that the example driver, register and signaling are not to be taken in a limiting manner and other implementations for the hardware module in a multiplexing system can apply.

Further implementations of TXMUX in a multiplexing system become readily apparent from the various implementations described above in conjunction with the method 100 and 200.

The hardware module TXMUX may be comprised in a terminal device. The terminal device may be a user equipment (UE), a mobile phone, a wearable device, or any terminal device with uplink transmission capability in mobile communication systems.

Various embodiments of the improved multiplexing solution can be implemented in the form of logic in hardware or in a combination with software. The logic may be stored in a computer readable or machine-readable storage medium as a set of instructions adapted to direct one or more processors of a device to perform a set of steps disclosed in embodiments of the improved multiplexing solution.

The specification and drawings are, accordingly, to be regarded in an illustrative rather than a restrictive sense. However, it will be evident that various modifications and changes may be made thereunto without departing from the scope of the invention as set forth in the claims.

### LIST OF REFERENCE SIGNS

- 100, 200: method
- 101-103, 201-205: steps
- TXMUX: hardware module
- MEM: memory
- PROC: processing unit
- CTRL: control unit
- MUX: execution unit

## Claims

1. A method for multiplexing one or more data sources to a set of uplink time and frequency resources by a hardware module, the method comprising:
- determining one or more patterns, wherein each pattern
- indicates a mapping of data from at least one of the one or more data sources to locations in the set of resources;
- is represented by a pattern type associated with pattern parameters, wherein a pattern type is selected from a set of pre-defined pattern types, and each pre-defined pattern type is associated with a respective pre-defined set of pattern parameters;
- providing the one or more patterns to the hardware module; and
- performing, by the hardware module, the mapping indicated by each pattern.

2. The method according to claim 1, the method further comprising:
- determining one or more orthogonal frequency-division multiplexing, OFDM, symbols in the set of resources, wherein at least one of the one or more symbols uses at least one of the determined one or more patterns to select data from the at least one of the one or more data sources;
- associating the respectively used patterns to the at least one of the one or more symbols;
- providing the one or more symbols to the hardware module; and
- for each symbol associated with the respectively used patterns, performing by the hardware module the mapping indicated by each used pattern.

3. The method according to claim 2, wherein associating the respectively used patterns to the at least one of the one or more symbols comprises a bitmap indicating the respectively used patterns.

4. The method according to one of claims 1 to 3, wherein the pre-defined pattern types include at least one of: mapping zeros and/or data from a data source to contiguous locations in the set of resources, mapping data from a data source to noncontiguous locations in the set of resources, mapping data from a data source to contiguous and noncontiguous locations in the set of resources.

5. The method according to one of claims 1 to 4, wherein the pre-defined set of pattern parameters includes at least one of: an identifier of the associated pattern type, one or more identifiers of the one or more data sources respectively, indicators of locations in the set of resources; wherein the indicators include at least one of: beginning and end locations, offset of locations, stride of locations, a bitmap of locations, complement usage of locations.

6. The method according to one of claims 1 to 5, wherein determining the one or more patterns is based on 3GPP standards for uplink resource multiplexing.

7. A hardware module for multiplexing one or more data sources to a set of uplink time and frequency resources, comprising a memory, a processing unit and a plurality of interfaces, wherein
- the memory is configured to store one or more patterns, wherein each pattern
- indicates a mapping of data from at least one of the one or more data sources to locations in the set of resources;
- is represented by a pattern type associated with pattern parameters, wherein a pattern type is selected from a set of pre-defined pattern types, and each pre-defined pattern type is associated with a respective pre-defined set of pattern parameters;
- the processing unit is configured to perform the mapping indicated by each stored pattern;
- a first interface of the plurality of interfaces is configured to fetch data from the one or more data sources; and
- a second interface of the plurality of interfaces is configured to output each fetched data with the mapped locations in the set of resources.

8. The hardware module according to claim 7, wherein
- the memory is further configured to store an association between one or more orthogonal frequency-division multiplexing, OFDM, symbols with the stored one or more patterns, wherein at least one of the one or more symbols uses at least one of the stored one or more patterns to select data from the at least one of the one or more data sources; and
- the processing unit is further configured to, for each of the at least one of the one or more symbols, perform the mapping indicated by each used pattern.

9. The hardware module according to claim 8, the hardware module comprises a third interface of the plurality of interfaces for storing the one or more patterns and/or the association into the memory.

10. The hardware module according to one of claims 8 to 9, wherein the association between the one or more symbols with the stored one or more patterns comprises a bitmap indicating the at least one of the stored one or more patterns used by the at least one of the one or more symbols.

11. The hardware according to one of claims 7 to 10, wherein the processing unit comprises a control unit and an execution unit, wherein
- the control unit is configured to select a pattern to be executed from the stored pattern types; and
- the execution unit is configured to perform the mapping indicated by the selected pattern.

12. The hardware module according to one of claims 7 to 11, wherein the first interface is configured to fetch data from the one or more data sources including physical uplink shared channel (PUSCH) data, PUSCH demodulation reference signal (DMRS), physical uplink control channel (PUCCH) data, PUCCH DMRS, physical random access Channel (PRACH) sequences, sounding reference signals (SRS), zeros.

13. The hardware module according to one of claims 7 to 12, wherein the second interface is configured to output each fetched data to an input memory of an IFFT processor at addresses corresponding to the mapped locations in the set of resources.

14. A terminal device comprising a hardware module according to one of claims 7 to 13.

15. A computer program product comprising instructions which, when executed on one or more processors of a device having a hardware module, cause the one or more processors to perform the method according to any of claims 1 to 6.
